# EUROPÄISCHE PATENTSCHRIFT

(11) **EP 3 259 396 B1**
(45) Veröffentlichungstag und Bekanntmachung des Hinweises auf die Patenterteilung: **10.04.2019**
(21) Anmeldenummer: 16707628.0
(22) Anmeldetag: 16.02.2016
(51) Int. Cl.: D06M 10/02, D06M 10/08, D06M 13/513, D06M 15/356, B29B 15/08, B29B 15/12, B29D 30/38, B29D 30/40, C08J 5/06, C08J 7/12, B29C 59/14, B29D 30/00

(54) **VERFAHREN ZUR VERBESSERUNG DER HAFTUNG ZWISCHEN EINEM VERSTÄRKUNGSELEMENT UND EINEM ELASTOMEREN MATRIXMATERIAL**
PROCESS TO INCREASE THE ADHESION BETWEEN A REINFORCING ELEMENT AND AN ELASTOMERIX MATRIX
PROCÉDÉ POUR AMÉLIORER L'ADHÉSION ENTRE UN ÉLÉMENT DE RENFORT ET UNE MATRICE ÉLASTOMÉRIQUE

(30) Priorität: 18.02.2015 DE 102015001902
(43) Veröffentlichungstag der Anmeldung: 27.12.2017
(73) Patentinhaber: Continental Reifen Deutschland GmbH, 30419 Hannover (DE)
(72) Erfinder: GROTE, Claudia, 30655 Hannover (DE); JANSSEN, Eberhard, 52353 Düren (DE); RABE, Maike, 41648 Neuss (DE); KRAMER, Thomas, 32049 Herford (DE); KLINKHAMMER, Kristina, 252072 Aachen (DE); ROHLEDER, Esther, 41065 Mönchengladbach (DE)
(74) Vertreter: Finger, Karsten
(86) Internationale Anmeldenummer: PCT/EP2016/000256
(87) Internationale Veröffentlichungsnummer: WO 2016/131535

(56) Entgegenhaltungen:
- EP-A1- 1 582 270
- EP-A2- 2 815 876
- GB-A- 2 473 002
- US-A- 4 469 748
- US-A1- 2011 244 139

## Beschreibung

Die Erfindung betrifft ein Verfahren zur Verbesserung der Haftung zwischen einem Verstärkungselement, insbesondere einem textilen, Fasern umfassenden Verstärkungselement und einem elastomeren Matrixmaterial, insbesondere einem Kautschuk oder einer Kautschukmischung, wobei nachfolgend das Verstärkungselement in das Matrixmaterial eingebettet werden oder zumindest mit diesem beschichtet werden soll. Die Erfindung betrifft insbesondere ein Verfahren zur Beschichtung eines Verstärkungselementes zum Zweck der Haftungsverbesserung.

Im Stand der Technik ist es bekannt, dass Verstärkungselemente nicht ohne Weiteres dauerhaft mit einem elastomeren Matrixmaterial beschichtet oder in dieses für Verstärkungszwecke eingebettet werden können. Dies liegt z.B. an stark unterschiedlichen Werten des Elastizitätsmoduls beider zu verbindender Materialien sowie an der unterschiedlichen Oberflächenchemie.

Besonders im Bereich der Reifenherstellung ergibt sich dieses Problem bei der benötigten Haftung zwischen einem elastomeren Kautschuk-Matrixmaterial des Reifens und den metallischen oder ganz besonders den textilen Reifencorden, welche als Verstärkungselemente darin vorgesehen werden. Dabei wird hier und in der nachfolgenden Erfindungsbeschreibung unter dem Begriff Kautschuk sowohl Naturkautschuk verstanden als auch synthetisch hergestellter Kautschuk, ebenso wie Kautschukmischungen, auch gefüllte Kautschukmischungen.

Im etablierten Stand der Technik werden zur Verbesserung der Haftung zwischen den verschiedenen Materialien Haftvermittler eingesetzt. Im Bereich der Reifenherstellung ist z.B. der sogenannte RFL-Dip bekannt, bei dem die Verstärkungselemente - regelmäßig textile Corde - mit einer Mischung aus Resorcin / Formaldehyd und Latex beschichtet werden.

Resorcin und Formaldehyd sind gesundheitlich und hinsichtlich der Umweltwirkungen bedenklich, so dass grundsätzlich Anstrengungen unternommen werden, Alternativen zur Verbesserung der Haftung zu erschließen, bislang mit nicht genügend zufriedenstellenden Resultaten.

EP2815876-A2 offenbart die Beschichtung einem stahlhaltigen Verstärkungselement mit einem Polymer zur Verbesserung der Haftung zwischen dem Verstärkungselement, und einem elastomeren Matrixmaterial, worin das Präpolymer-beschichtete Verstärkungselement der Einwirkung eines atmosphärischen Plasmas ausgesetzt wird.

GB2473002-A offenbart die Beschichtung einem stahlhaltigen Verstärkungselement mit einem Sol-gel zur Verbesserung der Haftung zwischen dem Verstärkungselement, und einem elastomeren Matrixmaterial.

EP1582270-a1 offenbart ein Verfahren zur Beschichtung eines Substrats mit einer Sol-Gel Beschichtung. Die Beschichtung des Substrats erfolgt mit einem Sol-Präpolymer gleichzeitig mit der Einwirkung eines atmosphärischen Plasmas.

Es ist daher eine Aufgabe der Erfindung, ein Verfahren bereit zu stellen, mit dem die Haftung zwischen elastomeren Matrixmaterialien, wie z.B. Kautschuk und Verstärkungselementen verbessert werden kann, insbesondere unter Verzicht auf Resorcin und Formaldehyd.

Besonders ist es eine Aufgabe, die Haftung elastomerer Matrixmaterialien, wie z.B. synthetischem oder natürlichem Kautschuk oder insbesondere gefüllten Kautschukmischungen an textilen Fasern und Geweben, insbesondere an textilen Corden zu verbessern. Dabei werden unter Corden verdrehte Fäden / Filamente verstanden. Insbesondere soll eine Haftungsverbesserung bei textilen Corden aus Polymerfasern erzielt werden, z.B. aus Polyester oder Polyamiden besonders mit dem Ziel diese bei der Reifenherstellung verwenden zu können.

Wenngleich das Gebiet der Reifenherstellung bevorzugt benannt wird, ist die Erfindung nicht hierauf beschränkt. Ebenso ist die Anwendung der Erfindung bei textilen Fasern nur bevorzugt, nicht hingegen hierauf beschränkt, auch nicht auf textile Verstärkungselemente.

Z.B. metallische Elemente und bevorzugt auch metallische Corde sollen erfindungsgemäß behandelbar sein, um die Haftung dieser Elemente an elastomeren Matrixmaterialien zu verbessern.

Im Sinne der Erfindung gilt eine Haftungsverbesserung als erzielt, wenn diese nach erfindungsgemäßer Behandlung des Verstärkungselementes mit dem nachfolgend beschriebenen Verfahren besser ist als bei einem unbehandelten Verstärkungselement und ganz besonders, wenn die Haftung nach erfindungsgemäßer Behandlung besser ist als nach einer etablierten Behandlung eines Verstärkungselementes mit einem RFL-Dip.

Gemäß der Erfindung wird diese Aufgabe dadurch gelöst, dass das Verstärkungselement mit einer Sol-Gel-Beschichtung versehen wird und das Sol-Gel-beschichtete Verstärkungselement der Einwirkung eines Niederdruckplasmas insbesondere eines Niederdruckplasmas ausgesetzt wird.

Als bevorzugtes Niederdruckplasma wird ein solches verstanden, dass bei Druckbedingungen zumindest unterhalb der örtlichen normalen Umgebungsatmosphäre vorliegt, also im Regelfall bei Drücken kleiner 1000 mbar. Im Vergleich zu einem Plasma unter umgebenden Atmosphärendruck, insbesondere im Bereich von 1000 +/- 100 mbar hat das Niederdruckplasma im darunter liegenden Druckbereich den Vorteil, dass weniger Faserschädigungen bei der Plasmaeinwirkung entstehen.

Bevorzugt wird das Verfahren bei Drücken kleiner 2 mbar durchgeführt, insbesondere was auch den Vorteil geringen Gasverbrauchs mit sich bringt. Ein besonders bevorzugter Druckbereich des Plasmas in einer Plasmakammer oder einer Plasmazone einer Plasmakammer liegt im Bereich von 0,5 mbar bis 1,5 mbar.

Unerwarteter Weise wurde gefunden, dass eine Niederdruckplasma-Einwirkung auf ein Sol-Gel-beschichtetes Verstärkungselement zu einer Haftungsverbesserung gegenüber einer alleinigen Sol-Gel-Beschichtung führt, da unbefangen zunächst zu erwarten war, dass durch die Plasmaeinwirkung eine Entfernung des organischen Anteils einer Sol-Gel-Schicht durch sogenanntes Plasma-Ätzen erfolgen würde, da die Einwirkung von Plasmen zum Reinigung von Oberflächen vor nachfolgenden Beschichtungsprozessen bekannt ist.

Es zeigte sich jedoch wider Erwarten, dass nach einer Plasmabehandlung eines Sol-Gel-beschichteten Verstärkungselementes die Sol-Gel-Schicht andere, deutlich vorteilhaftere Haftungseigenschaften hat gegenüber einer z.B. lediglich ofengetrockneten Sol-Gel-Schicht.

Die Erfindung kann dabei bevorzugt vorsehen, die Sol-Gel-Beschichtung derart auszuführen, dass diese zu einer Feststoffauflage auf dem Verstärkungselement von 0,02 bis 5 Gewichtsprozent führt, bevorzugt von 1 bis 2,5 Gewichtsprozent führt, insbesondere bezogen auf das Gewicht des unbeschichteten Verstärkungselements. Bei der Sol-Gel-Beschichtung handelt es sich um ein an sich im Stand der Technik bekanntes Verfahren, bei welchem eine Beschichtung aus kolloidaler Dispersion von Prekursoren, insbesondere mit nanopartikulären Bestandteilen, hergestellt wird, wobei durch einsetzende Hydrolyse der gemischten Prekursoren, Kondensation und Polykondensation eine Gelierung erfolgt und das erzeugte Gel anschließend getrocknet wird.

Die Erfindung kann in einer möglichen Ausgestaltung vorsehen, dass zunächst zeitlich vor einer Plasmaeinwirkung die Sol-Gel-Beschichtung des Verstärkungselementes erfolgt, wofür z.B. in üblicher Weise wenigstens ein dispergierter Prekursor auf die Oberfläche eines Verstärkungselementes aufgetragen wird. Es kann sodann vorgesehen sein, Polymerisation, Hydrolyse und Kondensation der Sol-Gel-Schicht zunächst abzuwarten, ggfs. unter thermischer Beschleunigung außerhalb eines Plasmas, wie z.B. im Ofen und die so gebildete Sol-Gel-Schicht mit einem Plasma nachzubehandeln.

Eine andere Ausführung kann auch vorsehen, dass zeitlich vor einer Plasmaeinwirkung die Sol-Gel-Beschichtung des Verstärkungselementes erfolgt, wofür z.B. in üblicher Weise wenigstens ein dispergierter Prekursor auf die Oberfläche eines Verstärkungselementes aufgetragen wird und dass anschließend durch die Einwirkung des Plasmas Hydrolyse und /oder die Polymerisation und/oder Kondensation des Sol-Gel nach dessen Applikation auf dem Verstärkungselement zumindest initiiert wird, insbesondere die Polymerisation und/oder Kondensation und/oder Hydrolyse des Sol-Gels vollständig unter Einwirkung des Plasma erfolgt. Insbesondere auch die Trocknung des gebildeten Gels kann unter Einwirkung des Plasmas vorgesehen sein.

Ebenso kann es vorgesehen sein, bereits die Beschichtung des Verstärkungselementes mit einem Sol-Gel bzw. den dispergierten Prekursoren gleichzeitig mit der Einwirkung des Plasmas vorzunehmen, insbesondere dadurch, dass die Sol-Gel-Materialien durch Einsprühen in das Plasma, z.B. in eine Plasmazone in einer Reaktionskammer mittels Düse auf das Verstärkungselement aufgebracht werden. Auch hiernach kann zumindest die Initiierung der Polymerisation und/oder Kondensation und/oder Hydrolyse der Sol-Gel-Materialien im Plasma erfolgen, ggfs. vollständig durchgeführt werden.

Bei allen möglichen, insbesondere den vorgenannten Verfahrensvarianten kann es vorgesehen sein, auch vor einem Auftragen der Sol-Gel-Materialien das zu beschichtende Verstärkungselement in einem Plasma vorzubehandeln, z.B. zum Zweck der Reinigung.

Bei allen möglichen, insbesondere den vorgenannten Verfahrensvarianten kann es weiterhin vorgesehen sein, dass die Plasmatemperatur oberhalb der Glasumwandlungstemperatur des Materials des zu beschichtenden Verstärkungselementes gewählt wird. Dies trifft besonders zu, wenn es sich um ein teilkristallines Material des Verstärkungsmateriales, wie beispielsweise einen Kunststoff, z.B. Polyester und besonders Fasern oder Corden aus diesem Material, handelt.

Bevorzugt wird die Plasmatemperatur in einem Bereich von 100 Grad Celsius bis 150 Grad Celsius gewählt, insbesondere wenn Polyethylenterephtalat verwendet wird. Es wird so ein Bereich genutzt, in welchem keine thermischen Schädigungen des Verstärkungselemente-Materials oder auch der Sol-Gel-Bestandteile zu erwarten sind.

Die Erfindung kann vorsehen, die verfahrensgemäße Behandlung eines Verstärkungselementes in einer Plasmakammer, insbesondere Unterdruckkammer vorzunehmen, in welcher das Plasma gezündet und aufrechterhalten wird für die Dauer einer gewünschten Behandlung, z.B. für bevorzugt 10 bis 120 Sek.

Neben Batch-Prozessen kann auch eine Rolle-zu-Rolle Behandlung von "endlosen" Verstärkungselementen, z.B. Corden vorgenommen werden, die durch das Plasma z.B. als flexibler Strang oder Bahnenware hindurchgeführt werden, wie z.B. bei textilen Reifencorden oder Corden oder Cordgewebe.

Dabei können eine Abwickelspule oder -rolle und eine Aufwickelspule oder -rolle jeweils in der Plasmakammer bzw. in der Unterdruckkammer vorgesehen sein oder es werden diese Spulen alternativ außerhalb der Plasmakammer positioniert und das strang- oder bahnenförmige Verstärkungselement durch jeweils einen Schleusenbereich zwischen Kammer und Wickler geführt, so dass trotz kammerexterner Lagerung eine Behandlung durch Plasma im Unterdruck innerhalb der Plasmaklammer erschlossen wird.

Die Erfindung kann vorsehen, eine spulentragende Abwickelvorrichtung beim Abwickeln zu bremsen, insbesondere kraftkontrolliert zu bremsen, insbesondere um ein Schrumpfen des Verstärkungselementes im Plasma zu verhindern.

Besonders bei einer Kammer-externen Lagerung der Spulen oder Rollen ist es vorteilhaft, wenn als Gaszusammensetzung für das Plasma diejenige Zusammensetzung der natürlichen Umgebungsatmosphäre gewählt wird, diese kann insofern direkt genutzt werden.

Allgemein kann für die Zwecke der erfindungsgemäßen Verfahrensdurchführung als Prozessgas im einfachsten und kostengünstigsten Fall Luft gewählt werden. In weiterer Bevorzugung kommen z.B. Sauerstoff, Stickstoff oder Edelgase, wie Argon zum Einsatz oder auch Mischungen dieser oder anderer Gase.

In jedem Fall wird zwischen Abwicklung wenigstens eines Stranges eines Verstärkungselementes von wenigstens einer Abwickelspule und der Aufwicklung desselben auf wenigstens einer Aufwickelspule die erfindungsgemäße Behandlung des wenigstens einen Stranges, zumindest entlang eines Teils seiner gesamten Erstreckung durchgeführt.

Für die Plasmaerzeugung kann es vorgesehen sein, wenigstens einen Mikrowellen-, Radiofrequenz- oder Kilohertzgenerator einzusetzen und hier z.B. mit Generatorleistungen im Bereich von 20 bis 200 Watt/ Liter Reaktorvolumen, bevorzugt 60 bis 120 Watt/ Liter zu arbeiten. Dabei werden Plasmaeinstellung, insbesondere deren physikalische Parameter bevorzugt an die Reaktivität des oder der verwendeten Gase angepasst, bzw. in deren Abhängigkeit gewählt.

Sofern eine Beschichtung des Verstärkungselementes nicht unter der Einwirkung eines Plasmas erfolgt, wie z.B. beim Einsprühen in die Reaktionskammer mittels Düse oder durch ein auf das Verstärkungselement aufgesprühtes Aerosol unter Plasmaeinwirkung kann es vorgesehen sein, dass das Verstärkungselement vor dem Eintritt in eine Plasmakammer mit der Sol-Gel-Beschichtung versehen wird, ggfs. nach einer bereits z.B. zum Zweck der Reinigung erfolgten Plasmabehandlung.

Darunter wird zumindest das Auftragen der Prekursoren, also der noch nicht vernetzten Sol-Gel-Bestandteile verstanden, in weiterer Ausführung jedoch die Fertigstellung der Sol-Gel-Beschichtung zumindest bis zum Abschluss der Polykondensation und weiterhin bevorzugt inkl. Trocknung.

Ein Verstärkungselement, insbesondere textiles Verstärkungselement kann z.B. vorder Einführung in die Plasmakammer beschichtet werden, z.B. durch die Hindurchführung durch ein Bad aus den Sol-Gel-Materialien. Besonders bei textilen Verstärkungselementen, wie beispielsweise Reifencorden kann ein Foulard zur Beschichtung eingesetzt werden, welcher der Plasmakammer vorgelagert ist. Die Beschichtung, insbesondere mit einer solchen Maschine kann in den Rolle-zu-Rolle Prozess integriert sein.

Die Erfindung kann es vorsehen, dass das Plasma in ein oder mehrere verschiedene Plasmazonen unterteilt wird, insbesondere wobei in den verschiedenen Zonen sich das Plasma durch physikalische und/oder chemische Parameter unterscheidet. Hierfür kann z.B. eine Plasmakammer unterschiedliche Kammerbereiche aufweisen, insbesondere die jeweils wiederum durch Schleusenbereiche voneinander getrennt sind, in denen die verschiedenen Parameter eingestellt, insbesondere kontrolliert werden.

Als verschieden gewählte Parameter können z.B. physikalische oder chemische Parameter gewählt werden, also z.B. die Plasmatemperatur, der Druck oder auch die Gaszusammensetzung im Plasma. So kann in einer ersten Plasmazone mit einem ersten Parametersatz eines gewählten Plasmas eine erste Art der Behandlung durchgeführt werden und in einer anderen Plasmazone mit einem anderen Parametersatz eine entsprechend andere Behandlung. Z.B. kann in einer ersten Zone durch Einsprühen in die Reaktionskammer mittels Düse der Auftrag der Sol-Gel-Materialien erfolgen und in wenigstens einer nachfolgenden Zone eine Trocknung und/oder eine gewünschte Funktionalisierung der Sol-Gel-Schicht.

Bei allen Anwendungen und Ausgestaltungsmöglichkeiten kann es weiterhin vorgesehen sein, dass die Einwirkung des Plasmas auf das Sol-Gel-beschichtete Verstärkungselement derart gewählt ist, dass die Entstehung eines keramischen / glasartigen Film auf dem Verstärkungselement verhindert ist. Beispielsweise kann die Einwirkzeit in einer Zone oder auch insgesamt über ggfs. alle Zonen, kleiner gewählt sein, als diejenige Zeit nach der eine keramische / glasartige Schicht aus der Sol-Gel-Schicht entsteht.

Die Erfindung kann es vorsehen, dass zur Bildung der Sol-Gel-Beschichtung wenigstens ein Prekursor oder Mischungen von mehreren Prekursoren eingesetzt werden. Der wenigstens eine Prekursor oder die Prekursoren einer Mischung haben eine chemische Struktur, die den Aufbau eines Polymerfilms mit einer Hybridstruktur ermöglicht. Dabei enthalten die Prekursoren erste funktionelle Gruppen, die durch Hydrolyse und Kondensation ein anorganisches Netzwerk untereinander oder zum elastomeren Matrixmaterial ausbilden. Weiterhin enthalten die Prekursoren zweite funktionelle Gruppen, die ein organisches Netzwerk untereinander und/oder zum später aufzuschichtenden elastomeren Matrixmaterial ausbilden.

Die hydrolysierbaren/kondensierbaren ersten Gruppen können ein bis drei Alkoxygruppen, insbesondere Ethoxygruppen und/oder Methoxygruppen umfassen. Die zweite Art von funktionellen Gruppen kann Vinyl-, Amino,-Glycidoxy- oder Mercaptogruppen umfassen.

Bevorzugt können somit zur Sol-Gel-Bildung Alkoxysiloxane eingesetzt werden mit der allgemeinen Struktur R(R')-Si-X₂ bzw. R-Si-X₃, mit X = hydrolysierbare Alkoxygruppe, bevorzugt Methoxy- oder Ethoxygruppe, welche vernetzen und die Haftung zum Verstärkungselement verbessern.

Der Rest R kann verschiedene Funktionalität auf dem Verstärkungselement, insbesondere einem textilen Cord bewirken und hier besonders die Haftung zur elastomeren Matrix verbessern. Als funktionelle Gruppen kommen hier z.B. Amino-, Vinyl, Acryloxy-, Mercapto-, Schwefel enthaltende- oder Epoxygruppen in Frage.

Besonders beim Einsatz mehrerer verschiedener Prekursoren in einer auszubildenden Sol-Gel-Beschichtung des Verstärkungselementes kann es vorgesehen sein, diese Prekursoren als fertige Mischung zu applizieren oder alternativ auch in einem mehrstufigen Auftragsprozess, insbesondere nacheinander. In einer Mischung können verschiedene Prekursoren bzw. Gruppen von Prekursoren, im Verhältnis von 1:1 bis 1:50 bevorzugt 1:1 bis 3:7 vorliegen.

Eine Weiterbildung kann auch vorsehen, dass Latex, insbesondere Vinyl-Pyridin-Latex auf das Verstärkungselement aufgebracht wird, insbesondere als Einzelschicht nach der Sol-Gel-Beschichtung oder als Anteil in einer Mischung mehrerer Prekursoren des Sol-Gels. Latex kann zur Gesamtheit der (übrigen) Prekursoren bevorzugt ein Verhältnis von 1:1 bis 1:50 bilden, bevorzugt 1:2 bis 1:4.

Das vorbeschriebene Verfahren kann besonders bevorzugt eingesetzt werden zur Vorbehandlung textiler Verstärkungselemente, insbesondere textiler Reifencorde umfassend Fasern und/oder Gewebe, insbesondere textiler Polymer-Reifencorde für eine nachfolgende Beschichtung mit Kautschuk oder Kautschukmischungen auch gefüllten Kautschukmischungen. Textile Faserelemente zum Einsatz bei der Erfindung können allgemein durch einen Faden oder auch zwei oder mehr verdrehte / verdrillte, verflochtene oder verwobene Fäden ausgebildet sein, wobei jeder Faden mehrere Fasern oder Filamente umfasst.

Die Verstärkungselemente umfassen z.B.: Polyamid, Polyester, Aromatischer Polyester oder aromatischer Polyamid, Polyvinylalkohol, Polyetheretherketone, Polyethylen, Polypropylen oder Baumwolle, Cellulose, Kohlenstofffasern, Glasfasern und/oder Hybrid-Cord. Unter einem Hybrid-Cord wird ein verdrehtes textiles Faserelement verstanden, dessen Fasern aus wenigstens zwei verschiedenen Materialien gebildet sind. In dieser Anwendung und allgemein kann durch die Vorbehandlung im Rahmen der Erfindung erzielt werden, dass funktionelle Gruppen auf die Oberfläche des Verstärkungselementes bzw. dessen Sol-Gel-Schicht eingebracht werden, z.B. Sauerstoffradikale, Ozon, Aminofunktionen etc., insbesondere welche jeweils spezielle Reaktionsmöglichkeiten mit dem elastomeren Matrixmaterial bieten.

Beispielsweise kann nach erfindungsgemäßer Vorbehandlung und nachfolgender Beschichtung mit elastomerem Matrixmaterial oder Einbettung in dieses eine Durchdringung entstehen zwischen dem elastomeren Matrixmaterial, insbesondere dem Kautschuk und funktionellen Gruppen, die in der Sol-Gel-Beschichtung durch die Plasma-Behandlung entstanden sind, wodurch eine kovalente Bindung zwischen Sol-Gel und Elastomermatrix entsteht.

Durchgeführte Versuche haben die positiven Wirkungen des erfindungsgemäßen Verfahrens bestätigt. Nachfolgend werden Haftkräfte (N, Newton) aufgelistet zwischen Reifencorden und einer handelsüblichen Kautschukmischung für Reifencordgewebe in 25 mm breiten Probenkörpern, die zwei übereinander angeordnete Lagen Reifencord über die gesamte Probenkörperbreite und eine 0,4 mm dicke beidseitige Matrixmaterialbeschichtung aufwiesen, bei unterschiedlichen haftungsverbessernden Behandlungsarten. Die eingesetzten Sol-Gel Prekursoren sind im Beispiel jeweils genannt.

Die Haftkräfte wurden bestimmt gemäß ISO 36:2011 (E), wobei mit den unterschiedlich behandelten Corden Haftversuche durchgeführt wurden, so genannte Peel-Tests, mit Auswertung gemäß DIN ISO 6133 ohne Alterung.

In den Probenkörpern wurden als Cord Polyester PET 1440x1x2 370 tpm (turns per meter) eingesetzt vom Hersteller Performance Fibers. Die Proben B und D wurden in einem üblichen Labortrockner bei 120°C für 3 min. getrocknet. Für die Herstellung der Proben C und E wurde eine Niederdruckplasma-Anlage verwendet. Als Prozessgas wurde Luft gewählt, die Verweildauer betrug 15 sec. Die eingesetzte Leistung wird unten angegeben.
Probe A: unbehandelter Cord aus Polyester: 106 N
Probe B: Polyester Cord A, behandelt mit je 2% Mercaptopropyltrimethoxysilan und Aminosilan, Trocknung und Kondensation im Trockenofen: 107 N
Probe C: Wie B, jedoch erfindungsgemäße Plasmabehandlung, 160 W: 148 N
Probe D: Polyester Cord A, behandelt mit 7% Aminosilanlösung und 3% Latex, Trocknung und Kondensation im Trockenschrank: 163 N
Probe E: Wie D, jedoch erfindungsgemäße Plasmabehandlung, 200 W: 196 N
Probe F: Polyester Cord A, beschichtet mit RFL-Dip nach Standardverfahren; Verfahrensstandard: 185 N. Beschrieben bspw. in R.B. Durairaj, Resorcinol, Chemistry, Technology and Applications; Springer Verlag 2005. Darin die Kapitel zu Polyesterhaftung (6.3 folgende).

Es zeigt sich im Vergleich, dass das erfindungsgenmäße Verfahren nicht nur die Haftung der Kautschukmatrix gegenüber unbehandelten Corden verbessert, sondern auch bei Verwendung gleicher Sol-Gel-Beschichtungsmaterialien gegenüber einer alternativ verwendeten Ofentrockung.

## Patentansprüche

1. Verfahren zur Verbesserung der Haftung zwischen einem textilen Verstärkungselement, insbesondere einem textile Fasern oder textile Filamente umfassenden Verstärkungselement und einem elastomeren Matrixmaterial, insbesondere einem Kautschuk, **dadurch gekennzeichnet, dass**
a. das Verstärkungselement mit einer Sol-Gel-Beschichtung versehen wird und
b. das Sol-Gel-beschichtete Verstärkungselement der Einwirkung eines Niederdruckplasmas ausgesetzt wird.

2. Verfahren nach Anspruch 1, **dadurch gekennzeichnet, dass** die Beschichtung zu einer Feststoffauflage auf dem Verstärkungselement von 0,02 bis 5 Gewichtsprozent führt, weiter bevorzugt von 1 bis 2,5 Gewichtsprozent führt, insbesondere bezogen auf das Gewicht des unbeschichteten Verstärkungselements.

3. Verfahren nach einem der vorherigen Ansprüche, **dadurch gekennzeichnet, dass** das Verstärkungselement ein textiles Faserelement, insbesondere Cord oder Gewebeelement ist, wobei die Fasern des Faserelementes ausgewählt sind aus Carbonfasern oder wenigstens einem der Polymere: Polyamid, aromatisches Polyamid, Polyester, aromatischer Polyester, Polyvinylalkohol, Polyetheretherketone, Polyethylen, Polypropylen, Polyethylenterephtalat, oder Baumwolle, Cellulose und/oder Hybrid-Cord.

4. Verfahren nach einem der vorherigen Ansprüche, **dadurch gekennzeichnet, dass** die Beschichtung des Verstärkungselementes mit einem Sol-Gel vor oder gleichzeitig mit der Einwirkung des Plasmas erfolgt, insbesondere die Sol-Gel-Materialien durch Einsprühen in das Plasma oder eine Zone des Plasmas auf das Verstärkungselement aufgebracht werden.

5. Verfahren nach einem der vorherigen Ansprüche, **dadurch gekennzeichnet, dass** vor einem Auftragen der Sol-Gel-Materialien das zu beschichtende Verstärkungselement der Einwirkung eines Plasmas ausgesetzt wird, insbesondere hierdurch eine Vorbehandlung zum Zweck der Reinigung durchgeführt wird.

6. Verfahren nach einem der vorherigen Ansprüche, **dadurch gekennzeichnet, dass** durch die Einwirkung des Plasmas die Polymerisation und/oder Kondensation des Sol-Gels nach dessen Applikation auf dem Verstärkungselement zumindest initiiert wird, insbesondere die Polymerisation und/oder Kondensation des Sol-Gels vollständig unter Einwirkung des Plasma erfolgt.

7. Verfahren nach einem der vorherigen Ansprüche, **dadurch gekennzeichnet, dass** die Plasmatemperatur oberhalb der Glasumwandlungstemperatur des Materials des zu beschichtenden Verstärkungselementes gewählt wird, beispielsweise in einem Bereich von 100 Grad Celsius bis 150 Grad Celsius, insbesondere für Polyethylenterephthalat.

8. Verfahren nach einem der vorherigen Ansprüche, **dadurch gekennzeichnet, dass** das Plasma in ein oder mehrere verschiedene Plasmazonen unterteilt wird, insbesondere wobei in den verschiedenen Zonen sich das Plasma durch physikalische und / oder chemische Parameter unterscheidet.

9. Verfahren nach einem der vorherigen Ansprüche, **dadurch gekennzeichnet, dass** die Einwirkung des Plasmas auf das Sol-Gel-beschichtete Verstärkungselement derart gewählt ist, dass die Entstehung eines keramischen / glasartigen Film auf dem Verstärkungselement verhindert ist, insbesondere eine Einwirkzeit kleiner ist als diejenige Zeit nach der eine keramische / glasartige Schicht entsteht.

10. Verfahren nach einem der vorherigen Ansprüche, **dadurch gekennzeichnet, dass** für die Sol-Gel-Beschichtung, insbesondere zur Ausbildung einer Hybridstruktur in der Sol-Gel-Beschichtung, insbesondere der Plasmabehandelten Sol-Gel-Beschichtung wenigstens ein Prekursor oder eine Mischung von Prekursoren eingesetzt wird, wobei wenigstens ein Prekursor oder die Mischung hydrolysierbare und kondensierbare erste funktionelle Gruppen umfasst, welche untereinander und/oder zum elastomeren Matrixmaterial ein anorganisches Netzwerk ausbilden und zweite funktionelle Gruppen umfasst, die ein organisches Netzwerk untereinander und/oder zum elastomeren Matrixmaterial ausbilden.

11. Verfahren nach Anspruch 10, **dadurch gekennzeichnet, dass** es sich bei der ersten Art der funktionellen Gruppen des wenigstens einen Prekursors um mehrere, insbesondere ein bis drei Alkoxygruppen, insbesondere Ethoxygruppen und/oder Methoxygruppen handelt, insbesondere die zweite Art der funktionellen Gruppen Vinyl-, Amino,- Glycidoxy- oder Mercaptogruppen umfassen.

12. Verfahren nach einem der vorherigen Ansprüche, **dadurch gekennzeichnet, dass** Latex, insbesondere Vinyl-Pyridin-Latex auf das Verstärkungselement aufgebracht wird, insbesondere als Einzelschicht nach der Sol-Gel-Beschichtung oder als Anteil in einer Mischung mehrerer Prekursoren des Sol-Gels.

13. Verwendung eines Verfahrens nach einem der vorherigen Ansprüche zur Vorbehandlung eines textilen Verstärkungselementes, insbesondere eines textilen Reifencordes, insbesondere eines textilen Polymer-Reifencordes für eine nachfolgende Beschichtung mit Kautschuk oder Kautschukmischung.

## Claims

1. Process for improving the adhesion between a textile reinforcing element, in particular a reinforcing element comprising textile fibers or comprising textile filaments, and an elastomeric matrix material, in particular a rubber, **characterized in that**
a. a sol-gel coating is provided to the reinforcing element and
b. the sol-gel-coated reinforcing element is exposed to the action of a low-pressure plasma.

2. Process according to Claim 1, **characterized in that** the coating procedure leads to a solid coating which, in particular based on the weight of the uncoated reinforcing element, amounts to from 0.02 to 5 percent by weight, more preferably from 1 to 2.5 percent by weight, on the reinforcing element.

3. Process according to any of the preceding claims, **characterized in that** the reinforcing element is a textile fiber element, in particular cord or woven-fabric element, where the fibers of the fiber element are selected from carbon fibers or from at least one of the following polymers: polyamide, aromatic polyamide, polyester, aromatic polyester, polyvinyl alcohol, polyetheretherketones, polyethylene, polypropylene, polyethylene terephthalate, or cotton, cellulose and/or hybrid cord.

4. Process according to any of the preceding claims, **characterized in that** the coating of the reinforcing element with a sol-gel takes place before or at the same time as the action of the plasma, and in particular the sol-gel materials are applied to the reinforcing element via spraying into the plasma or a zone of the plasma.

5. Process according to any of the preceding claims, **characterized in that** before an application of the sol-gel materials the reinforcing element to be coated is exposed to the action of a plasma, and in particular a pretreatment is thus carried out for the purpose of cleaning.

6. Process according to any of the preceding claims, **characterized in that** the action of the plasma at least initiates the polymerization and/or condensation of the sol-gel after application thereof on the reinforcing element, and in particular action of the plasma continues during the entire polymerization and/or condensation of the sol-gel.

7. Process according to any of the preceding claims, **characterized in that** the plasma temperature selected is above the glass transition temperature of the material of the reinforcing element to be coated, for example, in particular for polyethylene terephthalate, is selected in the range from 100 degrees Celsius to 150 degrees Celsius.

8. Process according to any of the preceding claims, **characterized in that** the plasma is divided into one or more different plasma zones in particular where physical and/or chemical parameters of the plasma differ in the various zones.

9. Process according to any of the preceding claims, **characterized in that** the action of the plasma on the sol-gel-coated reinforcing element has been selected in a manner that prevents the production of a ceramic / glassy film on the reinforcing element, and in particular the exposure time is shorter than the time required to produce a ceramic / glassy layer.

10. Process according to any of the preceding claims, **characterized in that** for the sol-gel coating, in particular for the development of a hybrid structure in the sol-gel coating, in particular the plasma-treated sol-gel coating, at least one precursor or mixture of precursors is used, where at least one precursor or the mixture comprises hydrolyzable and condensable first functional groups which develop an inorganic network among themselves and/or with respect to the elastomeric matrix material, and comprises second functional groups which develop an organic network among themselves and/or with respect to the elastomeric matrix material.

11. Process according to Claim 10, **characterized in that** the first type of the functional groups of the at least one precursor consists of a plurality of, in particular from one to three, alkoxy groups, in particular ethoxy groups and/or methoxy groups, and in particular the second type of functional groups comprises vinyl groups, amino groups, glycidoxy groups and mercapto groups.

12. Process according to any of the preceding claims, **characterized in that** latex, in particular vinyl pyridine latex, is applied to the reinforcing element, and in particular is applied as single layer following the sol-gel coating process or as constituent in a mixture of a plurality of precursors of the sol-gel.

13. Use of a process according to any of the preceding claims for the pretreatment of a textile reinforcing element, in particular of a textile tire cord, in particular of a textile polymer tire cord, for subsequent coating with rubber or rubber mixture.

## Revendications

1. Procédé d'amélioration de l'adhésion entre un élément renforçant textile, notamment un élément renforçant comprenant des fibres textiles ou des filaments textiles, et un matériau de matrice élastomère, notamment un caoutchouc, **caractérisé en ce que**
a. l'élément renforçant est muni d'un revêtement sol-gel, et
b. l'élément renforçant muni d'un revêtement sol-gel est exposé à l'action d'un plasma à basse pression.

2. Procédé selon la revendication 1, **caractérisé en ce que** le revêtement conduit à un revêtement solide sur l'élément renforçant de 0,02 à 5 pour cent en poids, de manière davantage préférée de 1 à 2,5 pour cent en poids, notamment par rapport au poids de l'élément renforçant non revêtu.

3. Procédé selon l'une quelconque des revendications précédentes, **caractérisé en ce que** l'élément renforçant est un élément fibreux textile, notamment un câble ou un élément en tissu, les fibres de l'élément fibreux étant choisies parmi les fibres de carbone ou d'au moins un des polymères suivants : le polyamide, le polyamide aromatique, le polyester, le polyester aromatique, l'alcool polyvinylique, la polyéther-éther-cétone, le polyéthylène, le polypropylène, le polytéréphtalate d'éthylène, ou le coton, la cellulose et/ou un câble hybride.

4. Procédé selon l'une quelconque des revendications précédentes, **caractérisé en ce que** le revêtement de l'élément renforçant avec un sol-gel a lieu avant ou simultanément avec l'action du plasma, les matériaux sol-gel étant notamment appliqués sur l'élément renforçant par pulvérisation dans le plasma ou une zone du plasma.

5. Procédé selon l'une quelconque des revendications précédentes, **caractérisé en ce qu'**avant une application des matériaux sol-gel, l'élément renforçant à revêtir est exposé à l'action d'un plasma, un prétraitement à des fins de nettoyage étant notamment ainsi réalisé.

6. Procédé selon l'une quelconque des revendications précédentes, **caractérisé en ce que**, par l'action du plasma, la polymérisation et/ou la condensation du sol-gel après son application sur l'élément renforçant sont au moins initiées, la polymérisation et/ou la condensation du sol-gel ayant notamment entièrement lieu sous l'action du plasma.

7. Procédé selon l'une quelconque des revendications précédentes, **caractérisé en ce que** la température du plasma est choisie supérieure à la température de transition vitreuse du matériau de l'élément renforçant à revêtir, par exemple dans une plage allant de 100 degrés Celsius à 150 degrés Celsius, notamment pour le polytéréphtalate d'éthylène.

8. Procédé selon l'une quelconque des revendications précédentes, **caractérisé en ce que** le plasma est divisé en une ou plusieurs zones de plasma différentes, le plasma différant notamment par des paramètres physiques et/ou chimiques dans les différentes zones.

9. Procédé selon l'une quelconque des revendications précédentes, **caractérisé en ce que** l'action du plasma sur l'élément renforçant muni d'un revêtement sol-gel est choisie de telle sorte que la formation d'un film céramique/vitreux sur l'élément renforçant soit évitée, un temps d'action étant notamment inférieur au temps après lequel une couche céramique/vitreuse se forme.

10. Procédé selon l'une quelconque des revendications précédentes, **caractérisé en ce que**, pour le revêtement sol-gel, notamment pour la formation d'une structure hybride dans le revêtement sol-gel, notamment le revêtement sol-gel traité par un plasma, au moins un précurseur ou un mélange de précurseurs est utilisé, au moins un précurseur ou le mélange comprenant des premiers groupes fonctionnels hydrolysables ou condensables, qui forment entre eux et/ou avec le matériau de matrice élastomère un réseau inorganique, et des deuxièmes groupes fonctionnels, qui forment un réseau organique entre eux et/ou avec le matériau de matrice élastomère.

11. Procédé selon la revendication 10, **caractérisé en ce que** le premier type de groupes fonctionnels dudit au moins un précurseur consiste en plusieurs, notamment un à trois, groupes alcoxy, notamment groupes éthoxy et/ou groupes méthoxy, le deuxième type de groupes fonctionnels comprenant notamment des groupes vinyle, amino, glycidoxy ou mercapto.

12. Procédé selon l'une quelconque des revendications précédentes, **caractérisé en ce qu'**un latex, notamment un latex de vinyl-pyridine, est appliqué sur l'élément renforçant, notamment sous la forme d'une couche individuelle après le revêtement sol-gel ou en tant que fraction dans un mélange de plusieurs précurseurs du sol-gel.

13. Utilisation d'un procédé selon l'une quelconque des revendications précédentes pour le prétraitement d'un élément renforçant textile, notamment d'un câble de pneu textile, notamment d'un câble de pneu polymère textile, pour un revêtement ultérieur avec un caoutchouc ou un mélange de caoutchouc.
